# EUROPEAN PATENT APPLICATION

(11) **EP 2 503 298 A1**
(43) Date of publication of application: **26.09.2012**
(21) Application number: 12160037.3
(22) Date of filing: 19.03.2012
(51) Int. Cl.: G01D 4/00, H01Q 1/22, H01Q 9/28

(54) **Network interface controller for a utility meter**

(30) Priority: 22.03.2011 US 201113053539
(71) Applicant: General Electric Company, Schenectady, NY 12345 (US)
(72) Inventor: Ree, Bradley Richard, Atlanta, GA Georgia 30339 (US)
(74) Representative: Cleary, Fidelma

(57) **Abstract**

Systems (100, 200, 300, 400) and devices (124, 200, 424) are disclosed for enabling communication by and between meters (110) and networks (102, 130, 132, 134,136) are disclosed. In one embodiment, a device (124, 200, 424) includes: a network interface controller (124, 200, 424) configured to directly couple to a meter socket (120) and provide a communication path between a utility meter (110) and at least one network (102, 130, 132, 134, 136), the network interface controller (124, 200, 424) includes: a computing device (224); and at least one communications interface (230, 240) coupled to the computing device (224), the at least one communications interface (230, 240) configured to be physically located within a meter socket housing (380).

## Description

### BACKGROUND OF THE INVENTION

The subject matter disclosed herein relates generally to meter technology, and more particularly, to tools for enabling communication by and between meters and networks.

Some utility companies, for example, certain electrical or gas service companies, employ utility meters to regulate and or record the amount of service (e.g. electricity) being consumed by a given location or consumer. Originally, use of these utility meters required onsite checks by a utility company employee/technician who would read and record the usage figures for billing and maintenance purposes. Recently, some utility meters have begun to evolve from mechanical devices that only monitor and display the amount of a given service flowing through them, to complex computerized systems which are connected to communication systems in order to automatically report usage figures to the utility company. However, to enable this functionality, these utility meters tightly couple the parts of these communication systems within the secure glass seal on utility meters. This integration and tight coupling within the meter itself may require that the communication system be included in the original meter design or integrated into an existing utility meter. Designing the communication system into the utility meter may complicate the design and assembly process, increases costs and require replacement of existing meters. Integrating the communication system into an existing meter may take skill-intensive labor, opening of the meter seal, recalibration and recertification of the existing meter.

### BRIEF DESCRIPTION OF THE INVENTION

Systems and devices for enabling meter communication are disclosed. In one embodiment, a device includes: a network interface controller configured to be directly coupled to a meter socket and provide a communication path between a utility meter and at least one network, the network interface controller including: a computing device; and at least one communications interface coupled to the computing device, the at least one communications interface configured to be physically located within a meter socket housing.

In a first aspect, the invention resides in a network interface controller configured to be directly coupled to a meter socket and provide a communication path between a utility meter and at least one network, the network interface controller including: a computing device; and at least one communications interface coupled to the computing device, the at least one communications interface configured to be physically located within a meter socket housing.

In a second aspect, the invention resides in a meter socket housing including: a meter socket and a network interface controller as described above, physically connected to the meter socket.

In a third aspect, the invention resides in an integrated meter socket system including: a meter socke and a network interface controller as described above, physically integrated with the meter socket.

### BRIEF DESCRIPTION OF THE DRAWINGS

Embodiments of the present invention will now be described, by way of example only, with reference to the accompanying drawings in which:
Fig. 1 shows a schematic illustration of a utility meter system in accordance with an embodiment of the invention;
Fig. 2 shows a schematic illustration of an integrated meter socket in accordance with an embodiment of the invention;
Fig. 3 shows a schematic illustration of a utility meter system in accordance with an embodiment of the invention;
Fig. 4 shows a schematic illustration of a utility meter system in accordance with an embodiment of the invention.

It is noted that the drawings of the disclosure are not necessarily to scale. The drawings are intended to depict only typical aspects of the disclosure, and therefore should not be considered as limiting the scope of the disclosure. In the drawings, like numbering represents like elements between the drawings.

### DETAILED DESCRIPTION OF THE INVENTION

As indicated above, aspects of the invention provide for systems and devices configured to enable utility meter communication with a network, including an Advanced Metering Infrastructure (AMI) by utilizing a meter socket with an integrated Network Interface Controller (NIC). The NIC being securely disposed within the meter socket such that a utility meter coupled to the meter socket is communicatively connected to the NIC which is communicatively connected to the AMI. The NIC is configured to facilitate communication between the AMI and the utility meter. As a result of utilizing aspects of the invention a utility company may be able to quickly upgrade existing meters and thereby facilitate meter communication and reading with an AMI.

In the art of metered services and systems, utility meters (including, e.g., electrical meters, smart meters, power meters, gas meters, etc.) are used to track and record service consumption. Recently, communication systems have been included or installed within utility meters to facilitate automatic meter reading and communication between the utility meter and a network. However, design inclusion and/or installation of a communication system within a utility meter is a complicated labor intensive processes. Inclusion of a communication system into the original design and manufacture of a utility meter may be costly, complex, time consuming and limiting to the versatility of the utility meter. Additionally, installation of a communication system into an existing utility meter may require opening of the secure seal on the utility meter, the glass or plastic dome which houses the metering hardware and/or software, protecting it from weather and tampering. Opening of the secure seal may expose the sensitive inner contents of the meter to the elements and potential damage. Further, once the secure seal is reinstalled, the utility meter/meter base may have to be recalibrated and recertified.

In contrast to the conventional system, embodiments of the current invention provide for a meter socket with an integrated NIC which facilitates communication between a network (e.g., a Neighborhood Area Network (NAN), a Home Area Network (HAN), an Advanced Metering Infrastructure (AMI), a utility network, a backhaul network, a cellular network, an Ethernet network, a Worldwide Interoperability for Microwave Access (WiMAX) network, a fiber optic network, a power line carrier network, a General Packet Radio Service (GPRS) network, a radio frequency mesh network, a radio frequency point-to-point network, etc.) and a utility meter coupled to the meter socket. The NIC includes a first communications interface and a second communications interface both communicatively connected to a computing device. The first communications interface is communicatively connected to the utility meter and the second communications interface is communicatively connected to the network, thereby providing a communication path between the utility meter and the network via the computing device. The computing device processes and routes communications between the utility meter and the network via the first communications interface and the second communications interface. As the NIC is integrated with the meter socket, existing utility meters may be updated without the need for a recalibration or opening of a secure seal on the utility meter as the NIC may be installed upon the meter socket. Additionally, design constraints (e.g., size and space concerns, NIC power supply, etc.) are not placed on new utility meters or utility meter manufacturers as the NIC is incorporated into the larger more flexible meter socket housing.

As will be appreciated by one skilled in the art, the integrated network interface controller described herein may be embodied as a system(s), method(s) or computer program product(s), e.g., as part of a utility network monitoring system, utility network, utility meter, etc. Accordingly, embodiments of the present invention may take the form of an entirely hardware embodiment, an entirely software embodiment (including firmware, resident software, micro-code, etc.) or an embodiment combining software and hardware aspects that may all generally be referred to herein as a "circuit," "module," "network" or "system." Furthermore, the present invention may take the form of a computer program product embodied in any tangible medium of expression having computer-usable program code embodied in the medium.

Any combination of one or more computer usable or computer readable medium(s) may be utilized. The computer-useable or computer-readable medium may be, for example but not limited to, an electronic, magnetic, optical, electromagnetic, infrared, or semiconductor system, apparatus, or device. More specific examples (a non-exhaustive list) of the computer-readable medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a transmission media such as those supporting the Internet or an intranet, or a magnetic storage device. Note that the computer-usable or computer-readable medium could even be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory. In the context of this document, a computer-usable or computer-readable medium may be any medium that can contain, store, communicate, or transport the program for use by or in connection with the instruction execution system, apparatus, or device. The computer-usable medium may include a propagated data signal with the computer-usable program code embodied therewith, either in baseband or as part of a carrier wave. The computer usable program code may be transmitted using any appropriate medium, including but not limited to wireless, wireline, optical fiber cable, RF, etc.

Computer program code for carrying out operations of the present invention may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

These computer program instructions may also be stored in a computer-readable medium that can direct a computer or other programmable data processing apparatus to function in a particular manner, such that the instructions stored in the computer-readable medium produce an article of manufacture including instruction means which implement the function/act specified in the block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide processes for implementing the functions/acts specified in the flowchart and/or block diagram block or blocks.

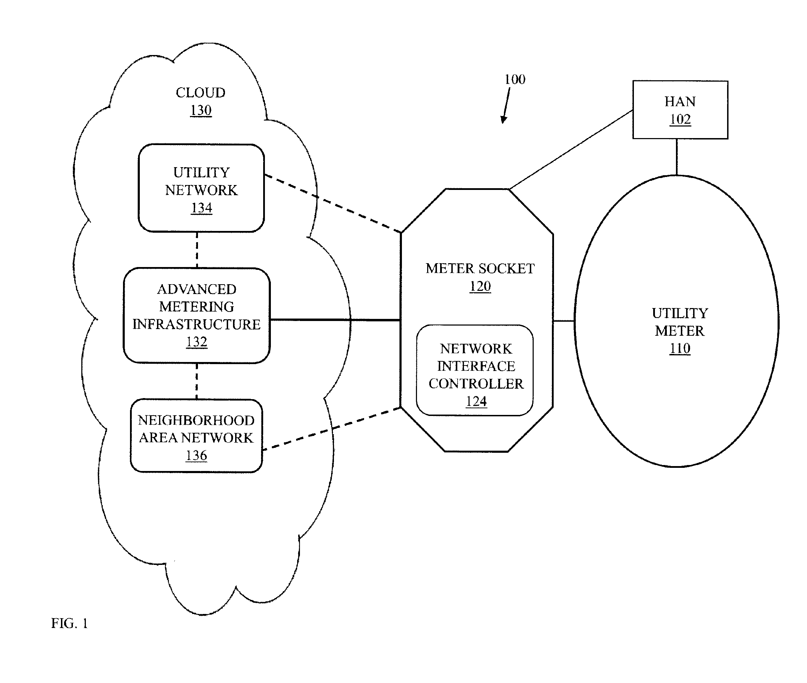

Turning to the figures, embodiments of a Network Interface Controller (NIC) are shown, where the NIC may be integrated with a meter socket, thereby providing a communication path between a utility meter coupled to the meter socket and at least one network. Each of the components in the Figures may be connected via conventional means, e.g., via wireless mesh, WiFi, power-line communication, Ethernet, Worldwide Interoperability for Microwave Access (WiMAX), fiber-optics, General Packet Radio Service (GPRS), radio frequency, radio frequency mesh, a radio frequency point-to-point, cellular or other known means as is indicated in the Figs. 1-4. Specifically, referring to Fig. 1, a schematic illustration of an embodiment of a utility meter system 100 is shown. Utility meter system 100 may include a utility meter 110 communicatively connected to a meter socket 120 and a Network Interface Controller (NIC) 124 disposed outside of utility meter 110. Utility meter 110 may comprise an electrical meter, a water meter, a gas meter, a smart meter or any other form of utility meter as is known in the art. NIC 124 may facilitate communication between utility meter 110 and a cloud 130. Cloud 130 may include any of an Advanced Metering Infrastructure (AMI) 132, a utility network 134, a Neighborhood Area Network (NAN) 136 or any other form of network as is known in the art. In this embodiment of the invention, NIC 124 may be directly coupled to meter socket 120. NIC 124 obtains communications (e.g., a service status, an operational command, a software update, a firmware update, metrology data, an amount of service consumed, a maximum demand, a power factor, a reactive power, a meter table, an end device data table, radio statistics, packet error rate statistics, etc.) from utility meter 110 and transmits the communications to cloud 130.

In an embodiment of the present invention, utility meter 110 may be communicatively connected to a Home Area Network (HAN) 102 which may communicate with cloud 130 through utility meter 110 via NIC 124 on meter socket 120. In another embodiment, utility meter 110 may be communicatively connected to meter socket 120 and communicate with HAN 102 and cloud 130 via meter socket 120 and NIC 124. In one embodiment of the invention, NIC 124 may draw power from meter socket 120. In another embodiment, meter socket 120 and NIC 124 may be physically integrated to form an integrated meter socket 120. In another embodiment, NIC 124 may substantially encompass a portion of meter socket 120. In another embodiment, meter socket 120 and NIC 124 may be physically unified. In one embodiment, NIC 124 may be housed within meter socket 120. In another embodiment, NIC 124 may provide a communication path between utility meter 110 and cloud 130 via power line communication. In one embodiment, NIC 124 may be directly physically disposed upon meter socket 120. In another embodiment of the invention, NIC 124 may provide a communication path between utility meter 110 and cloud 130 via radio frequency communication. In another embodiment of the invention, NIC 124 may provide a communication path between utility meter 110 and cloud 130 via a combination of radio frequency and power line communication. In another embodiment, utility network 134 on cloud 130 may monitor metrology data and service consumption at utility meter 110 via NIC 124.

As previously mentioned and discussed further below, Network Interface Controller (NIC) 124 has the technical effect of enabling utility meter 110 to perform, among other things, the communication functions described herein. It is understood that some of the various components shown in Fig. 1 can be implemented independently, combined, and/or stored in memory for one or more separate computing devices that are included in utility meter110. Further, it is understood that some of the components and/or functionality may not be implemented, or additional schemas and/or functionality may be included as part of utility meter system 100.

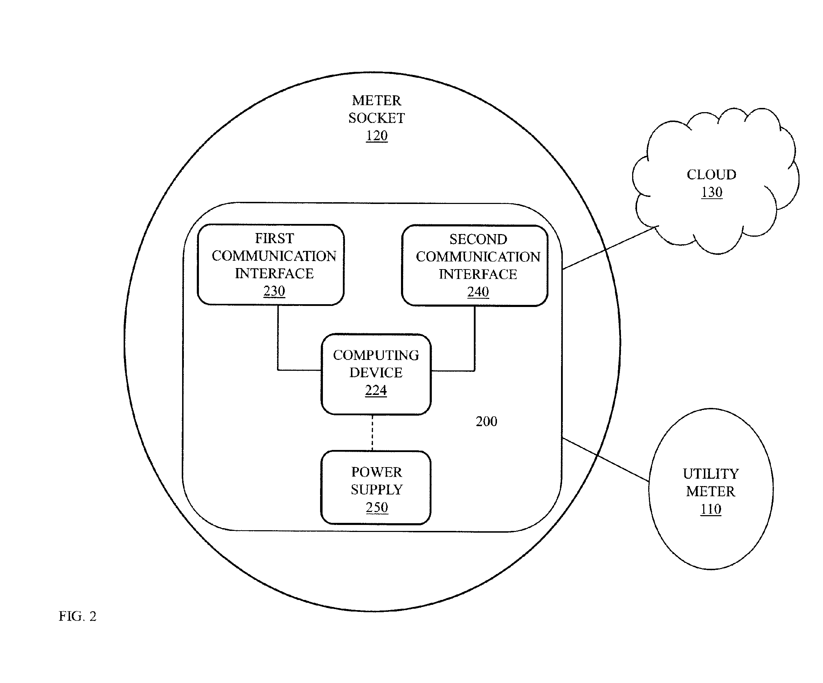

Turning to Fig. 2, a schematic illustration of an embodiment of a meter socket 120 with an integrated Network Interface Controller (NIC) 200 including a first communication interface 230 and a second communication interface 240 both communicatively connected to a computing device 224 is shown. It is understood that elements similarly numbered between Fig. 1 and Fig. 2 may be substantially similar as described with reference to Fig. 1. Redundant explanation of these elements has been omitted for clarity. Returning to Fig. 2, in this embodiment, first communication interface 230, second communication interface 240 and computing device 224 may be disposed directly upon meter socket 120. Computing device 224 may be communicatively connected to each of first communication interface 230 and second communication interface 240. In one embodiment, computing device 224 may be coupled to each of first communication interface 230 and second communication interface 240. In one embodiment, first communication interface 230 may provide a communication path between utility meter 110 and computing device 224 while second communication interface 240 may provide a communication path between computing device 224 and cloud 130. In one embodiment, computing device 224 may facilitate communication between utility meter 110 and cloud 130 by processing and/or routing communications there between via first communication interface 230 and second communication interface 240. In one embodiment, first communication interface 230 may include a radio interface configured to transmit communications between utility meter 110 and computing device 224 while second communication interface 240 may include a radio interface configured to transmit communications between computing device 224 and cloud 130. In another embodiment, first communication interface 230 may include a power line communication (PLC) interface configured to transmit communications between utility meter 110 and computing device 224 while second communication interface 240 may include a PLC interface configured to transmit communications between computing device 224 and cloud 130. In another embodiment, each of first communication interface 230 and second communication interface 240 may include a plurality of communication interfaces (including, e.g., a mesh network radio interface, a radio interface, a short-range radio interface, a cellular interface, a 900 MHz interface, a point to point interface, an optical interface, a power line communication interface, a radiofrequency communications link, an Ethernet interface, a Worldwide Interoperability for Microwave Access (WiMAX) interface, a fiber-optic interface, a General Packet Radio Service (GPRS) interface, etc.). In one embodiment, first communication interface 230 may include an optical interface configured to transmit communications between utility meter 110 and computing device 224. In one embodiment, first communication interface 230 may include a radio interface configured to transmit communications between utility meter 110 and computing device 224 while second communication interface 240 may include a power line communication interface configured to transmit communications between cloud 130 and computing device 224. In another embodiment, NIC 200 may include a power source 250 configured to power any of first communication interface 230, second communication interface 240 and computing device 224.

In any event, computing device 224 can comprise any general purpose computing article of manufacture capable of executing computer program code installed by a user (e.g., a personal computer, server, handheld device, etc.). However, it is understood that computing device 224, first communication interface 230 and second communication interface 240 are only representative of various possible equivalent computing devices that may perform the various process steps of the disclosure. To this extent, in other embodiments, computing device 224 can comprise any specific purpose computing article of manufacture comprising hardware and/or computer program code for performing specific functions, any computing article of manufacture that comprises a combination of specific purpose and general purpose hardware/software, or the like. In each case, the program code and hardware can be created using standard programming and engineering techniques, respectively.

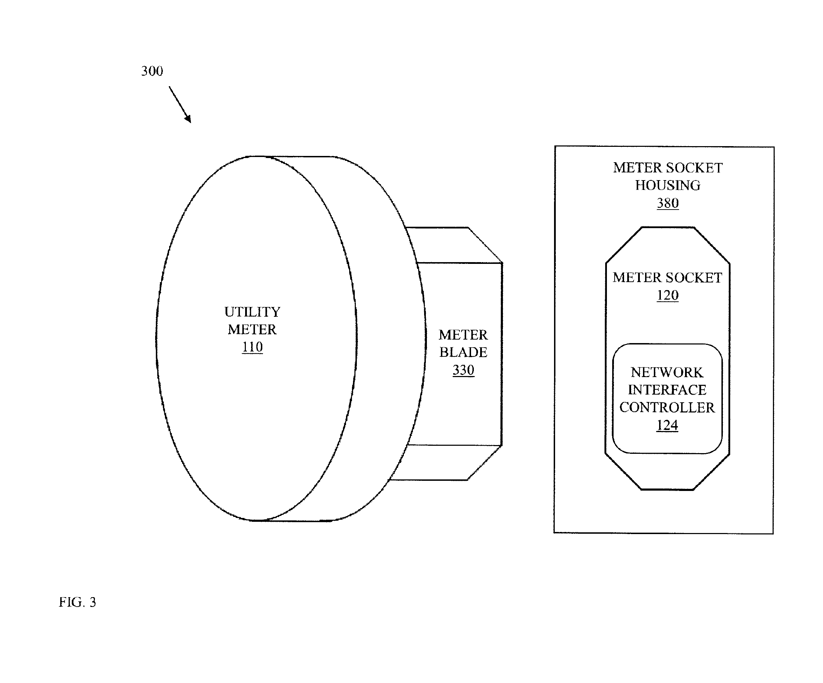

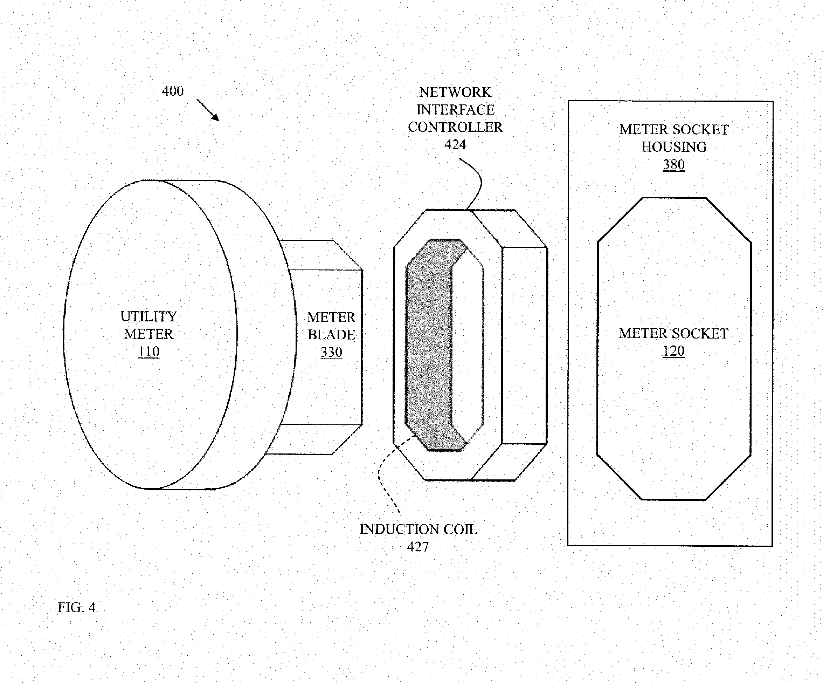

Turning to Fig. 3, a schematic illustration of an embodiment of a utility meter system 300 including a meter socket 120 with an integrated NIC 124 disposed within a meter socket housing 380 is shown. Meter socket housing 380 may include a meter socket housing system, a meter socket system, a meter socket compartment or any other form of meter socket housing known in the art. In one embodiment, meter socket 120 may be configured to receive a meter blade 330 of utility meter 110. Meter blade 330 configured to be coupled to meter socket 120 to provide any of a mechanical, communicative and/or electrical connection between utility meter 110 and meter socket 120. Meter blade 330 may include a sensor blade, a current blade, a voltage blade or any other form of meter blade known in the art. In one embodiment, NIC 124 may be designed and manufactured directly into meter socket 120. In another embodiment, NIC 124 may be integrated directly into an existing meter socket 120. In another embodiment, NIC 124 may be installed directly on a surface of meter socket 120 exposed by unplugging utility meter 110. In another embodiment, NIC 124 may be physically located within meter socket 120. Turning to Fig. 4, a schematic illustration of an embodiment of a utility meter system 400 including a NIC 424 configured to be interposed between utility meter 110 and meter socket 120 is shown. In one embodiment, utility meter system 400 may include a NIC 424 which may be directly connected to meter socket 120 and utility meter 110 upon utility meter 110 being plugged into meter socket 120. In one embodiment, NIC 424 may be configured to be disposed substantially around meter blade 330 of utility meter 110. In another embodiment, NIC 424 may be configured to be disposed around a plurality of meter blades 330. In another embodiment, NIC 424 may draw power directly from meter socket 120. In another embodiment, NIC 424 may include an induction coil 427 configured to be disposed around meter blade 330 to draw power for NIC 424 from Alternating Current (AC) flowing through meter blade 330.

The integrated network interface controller of the present disclosure is not limited to any one particular meter, electrical meter, smart meter, network or other system, and may be used with other power and communication systems. Additionally, the integrated network interface controller of the present invention may be used with other systems not described herein that may benefit from the adaptable, secure, real-time data communications link provided by the integrated network interface controller described herein.

As discussed herein, various systems and components are described as "obtaining" data (e.g., temperatures, dependency data, the operational status of a dependency aware device, etc.). It is understood that the corresponding data can be obtained using any solution. For example, the corresponding system/component can generate and/or be used to generate the data, retrieve the data from one or more data stores or sensors (e.g., a database), receive the data from another system/component, and/or the like. When the data is not generated by the particular system/component, it is understood that another system/component can be implemented apart from the system/component shown, which generates the data and provides it to the system/component and/or stores the data for access by the system/component.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A network interface controller (124, 200, 424) configured to directly couple to a meter socket (120) and provide a communication path between a utility meter (110) and at least one network (102, 130, 132, 134, 136), the network interface controller (124, 200, 424) including:
a computing device (224); and
at least one communications interface (230, 240) coupled to the computing device (224), the at least one communications interface (230, 240) configured to be physically located within a meter socket housing (380).

2. The network interface controller (124, 200, 424) of claim 1, wherein the at least one network (102, 130, 132, 134, 136) includes at least one of: a utility network (134), a Home Area Network (HAN) (102), a Neighborhood Area Network (NAN) (136), an Advanced Metering Infrastructure (AMI) (132), a cellular network, an Ethernet network, a Worldwide Interoperability for Microwave Access (WiMAX) network, and a backhaul network.

3. The network interface controller (124, 200, 424) of claim 1 or 2, wherein the at least one communications interface (230, 240) is further configured to provide a communication path between a Home Area Network (HAN) (102) and a Neighborhood Area Network (NAN) (136).

4. The network interface controller (124, 200, 424) of claim 1, 2 or 3, wherein the at least one communications interface (230, 240) includes:
a first radio interface (230, 240) communicatively connected to the computing device (224) and the utility meter (110), the first radio interface (230, 240) configured to provide a communication path between the computing device (224) and the utility meter (110); and
a second radio interface (230, 240) communicatively connected to the computing device (224) and the at least one network (102, 130, 132, 134, 136), the second radio interface (230, 240) configured to provide a communication path between the computing device (224) and the at least one network (102, 130, 132, 134, 136).

5. The network interface controller (124, 200, 424) of any of claims 1 to 4, wherein the at least one communications interface (230, 240) includes:
a first power line communication interface (230, 240) communicatively connected to the utility meter (110) and the computing device (224), the first power line communication interface (230, 240) configured to provide a communication path between the utility meter (110) and the computing device (224); and
a second power line communication interface (230, 240) communicatively connected to the at least one network (102, 130, 132, 134, 136) and the computing device (224), the second power line communication interface (230, 240) configured to provide a communication path between the computing device (224) and the at least one network (102, 130, 132, 134, 136).

6. The network interface controller of any preceding claim, wherein the at least one communications interface (230, 240) is selected from a group consisting of: a mesh network radio interface, a radio interface, a short-range radio interface, a cellular interface, a 900 MHz interface, an optical interface, a point to point interface, a power line communication interface, and a radiofrequency communications link.

7. The network interface controller (124, 200, 424) of any preceding claim, wherein the computing device (224) and the at least one communications interface (230, 240) are housed within the meter socket (120).

8. The network interface controller (124, 200, 424) of any claims 1 to 6, wherein the computing device (224) and the at least one communications interface (230, 240) are configured to be interposed between the meter socket (120) and the utility meter (110).

9. The network interface controller (124, 200, 424) of any of claims 1 to 6, wherein the computing device (224) and the at least one communications interface (230, 240) are configured to be disposed around a meter blade (330) of the utility meter (110).

10. A meter socket housing (380) comprising:
a meter socket (120); and
a network interface controller (124, 200, 424) as recited in any of claims 1 to 9.

11. An integrated meter socket system (300, 400) comprising:
a meter socket (120); and
a network interface controller (124, 200, 424) as recited in any of claims 1 to 9, physically integrated with the meter socket (120).
